# EUROPÄISCHE PATENTSCHRIFT

(11) **EP 3 414 436 B1**
(45) Veröffentlichungstag und Bekanntmachung des Hinweises auf die Patenterteilung: **11.12.2019**
(21) Anmeldenummer: 17700927.1
(22) Anmeldetag: 12.01.2017
(51) Int. Cl.: F01N 13/08, F01N 13/18, F01N 13/20

(54) **ABGASAUSLASSSYSTEM FÜR EIN KRAFTFAHRZEUG, KRAFTFAHRZEUG MIT EINEM SOLCHEN ABGASAUSLASSSYSTEM SOWIE VERFAHREN ZUR HERSTELLUNG EINES ABGASAUSLASSSYSTEMS**
EXHAUST GAS OUTLET SYSTEM FOR A MOTOR VEHICLE, MOTOR VEHICLE HAVING SUCH AN EXHAUST GAS OUTLET SYSTEM, AND METHOD FOR PRODUCING AN EXHAUST GAS OUTLET SYSTEM
SYSTÈME DE SORTIE DE GAZ D'ÉCHAPPEMENT POUR UN VÉHICULE AUTOMOBILE, VÉHICULE AUTOMOBILE DOTÉ D'UN TEL SYSTÈME DE SORTIE DE GAZ D'ÉCHAPPEMENT ET PROCÉDÉ DE PRODUCTION D'UN SYSTÈME DE SORTIE DE GAZ D'ÉCHAPPEMENT

(30) Priorität: 11.02.2016 DE 102016202056
(43) Veröffentlichungstag der Anmeldung: 19.12.2018
(73) Patentinhaber: Cisma Solutions ApS, 8600 Silkeborg (DK)
(72) Erfinder: KÖHNLEIN, Sebastian, 71139 Ehningen (DE); EISELE, Philipp, 70173 Stuttgart (DE); RADTKE, Sebastian, 70771 Leinfelden-Echterdingen (DE); ORILLE, Angel, 72160 Horb am Neckar (DE); LARRAZ, Jesus, 70197 Stuttgart (DE)
(74) Vertreter: Kohler Schmid Möbus Patentanwälte
(86) Internationale Anmeldenummer: PCT/EP2017/050513
(87) Internationale Veröffentlichungsnummer: WO 2017/137203

(56) Entgegenhaltungen:
- DE-A1- 19 517 462
- US-A1- 2010 212 767
- US-B1- 7 007 720

## Beschreibung

Die Erfindung betrifft ein Abgasauslasssystem für ein Kraftfahrzeug. Die Erfindung betrifft weiterhin ein Kraftfahrzeug mit einem solchen Abgasauslasssystem sowie ein Verfahren zur Herstellung eines Abgasauslasssystems.

Es ist bekannt, zur Einstellung der Leistung sowie der optischen und akustischen Eigenschaften eines Kraftfahrzeugs ein Endrohr eines Abgasauslasssystems mit einer Endrohrblende zu versehen.

Die US 7 007 720 B1 offenbart ein Endrohrsystem zur Anordnung an einem Endrohr mit einem Hitzeschild und einer Abdeckung. Der Hitzeschild ist an dem Endrohr befestigt und umgreift das Endrohr zumindest teilweise. Die Abdeckung ist an dem Hitzeschild befestigt und umgreift zumindest teilweise den Hitzeschild. Der Hitzeschild ist somit zwischen der Abdeckung und dem Endrohr angeordnet. Dabei schirmt der Hitzeschild die Abdeckung vor Erwärmung durch das Endrohr ab. An dem Hitzeschild ist zur Befestigung eine Ausnehmung ausgeformt, in die ein Vorsprung des Endrohrs einführbar ist.

Die DE 195 17 462 A1 offenbart ein Endrohr mit einem teleskopisch verschiebbaren Rohrstück im Endbereich. Das Rohrstück ist mittels einer Schraubendruckfeder in seiner ausgezogenen Stellung federnd nachgiebig gehalten. An dem Endrohr ist ein Vorsprung angeformt. Das Rohrstück weist einen Flanschabschnitt mit Ausnehmungen auf, in die Nasen des Endrohrs zur Befestigung des Rohrstücks eingreifen. Eine Sichtblende ist über einen Zwischenring fest mit dem Rohrstück verbunden.

Die US 2002/0053483 A1 offenbart die Befestigung einer doppelwandigen Endrohrblende an einem Endrohr mittels einer Schraube.

Aus der US 2006/0010861 A1 ist weiterhin ein Abgasfilter bekannt geworden. Der Abgasfilter weist zwei teilweise ineinander geschobene, im Wesentlichen zylinderförmige Gehäuseteile auf. Eine Rastverbindung sichert die Position der beiden Gehäuseteile in Richtung der Längsachse des Abgasfilters. Ein Lösen der Rastverbindung wird durch eine Schlauchschelle verhindert, die ein erstes Gehäuseteil radial auf ein zweites Gehäuseteil presst. Zur Abdichtung der Verbindung der beiden Gehäuseteile ist zwischen den Gehäuseteilen ein O-Ring vorgesehen.

Aus der KR 10 20012 0127950 A ist ein weiterer Abgasfilter bekannt geworden. Der bekannte Abgasfilter weist ein Endrohr auf. Um einen mittleren Teil des Endrohrs ist eine zweiteilige rohrförmige Blende angeordnet.

Die DE 10 2012 023 804 A1 offenbart schließlich eine Abgasanlage für ein Kraftfahrzeug. Die Abgasanlage weist ein Endrohr mit einer auf das Endrohr aufgesetzten Endrohrblende auf. Das Endrohr weist eine ringförmige Einprägung auf, um aus dem Endrohr strömendes Abgas in Richtung der zentralen Längsachse des Endrohrs zu leiten.

Aufgabe der vorliegenden Erfindung ist es demgegenüber, ein Abgasauslasssystem zu schaffen, bei dem eine Endrohrblende sicher, aber dennoch auf einfache Art und Weise an einem Endrohr befestigt ist. Aufgabe der vorliegenden Erfindung ist es weiterhin, ein Kraftfahrzeug mit einem solchen Abgasauslasssystem sowie ein Verfahren zur Herstellung eines Abgasauslasssystems bereitzustellen.

Diese Aufgabe wird durch ein Abgasauslasssystem gemäß Patentanspruch 1, ein Kraftfahrzeug gemäß Patentanspruch 7 sowie ein Verfahren gemäß Patentanspruch 8 gelöst. Die Unteransprüche geben zweckmäßige Weiterbildungen an.

Die Aufgabe wird somit erfindungsgemäß gelöst durch ein Abgasauslasssystem mit einem Endrohr. Das Endrohr ist fluidisch mit einer Abgasanlage eines Kraftfahrzeugs verbindbar. Das Abgasauslasssystem weist eine Endrohrblende auf, die zumindest teilweise am Endrohr angeordnet ist. Die Endrohrblende weist eine Endrohrblendeninnenwandung und eine radial versetzt zur Endrohrblendeninnenwandung angeordnete Endrohrblendenaußenwandung auf. Die Endrohrblendeninnenwandung ist mehrteilig ausgebildet und die Endrohrblendeninnenwandung ist zumindest teilweise durch eine erste Formschlussverbindung am Endrohr angeordnet. Ein erstes ringförmiges Befestigungselement sichert die Anordnung der Endrohrblende am Endrohr. Auf die Endrohrblendeninnenwandung ist die Endrohrblendenaußenwandung zumindest teilweise aufgeschoben.

Durch die erste Formschlussverbindung wird eine sichere Anordnung der Endrohrblende am Endrohr erreicht. Gleichzeitig ist die Endrohrblende auf einfache Art und Weise am Endrohr montierbar.

In besonders bevorzugter Ausgestaltung der Erfindung erfolgt die Verbindung zwischen Endrohrblende und Endrohr gänzlich ohne Stoffschluss. Hierdurch kann insbesondere auf ein Schweißverfahren bei der Montage der Endrohrblende am Endrohr verzichtet werden.

Die erste Formschlussverbindung kann in Form einer Ausnehmung ausgebildet sein, in die ein Vorsprung zumindest abschnittsweise formschlüssig eingreift. Vorzugsweise ist der erste Teil der ersten Formschlussverbindung in Form einer ersten ringförmigen Mulde ausgebildet und der zweite Teil der ersten Formschlussverbindung ist in Form einer zweiten ringförmigen Mulde ausgebildet. Derlei ringförmige Mulden sind auf einfache Art und Weise zu fertigen und behindern den Abgasfluss nur marginal.

Das Abgasauslasssystem kann an der Endrohrblendenaußenwandung eine dritte ringförmige Mulde aufweisen. Das erste ringförmige Befestigungselement ist in diesem Fall zumindest teilweise in der dritten ringförmigen Mulde angeordnet. Hierdurch entsteht eine zweite Formschlussverbindung zwischen der Endrohrblendenaußenwandung und der Endrohrblendeninnenwandung über das erste ringförmige Befestigungselement.

Um die mehrteilig ausgebildete Endrohrblendeninnenwandung an sich axial entgegengesetzten Bereichen gegen ein radiales Auseinanderfallen zu sichern, weist das Abgasauslasssystem vorzugsweise ein zweites ringförmiges Befestigungselement auf.

Das erste ringförmige Befestigungselement und/oder das zweite ringförmige Befestigungselement kann/können in Form eines O-Rings, einer Schlauchschelle, eines, insbesondere teilweise unterbrochenen, Metallrings oder eines Federrings ausgebildet sein.

Das zweite ringförmige Befestigungselement ist vorzugsweise zumindest teilweise in einer vierten ringförmigen Mulde angeordnet, die an der Endrohrblendeninnenwandung ausgebildet ist.

Eine besonders zuverlässige Verbindung zwischen der Endrohrblendenaußenwandung und der Endrohrblendeninnenwandung wird erzielt, wenn das Abgasauslasssystem an der Endrohrblendenaußenwandung eine fünfte ringförmige Mulde aufweist, wobei das zweite ringförmige Befestigungselement zumindest teilweise in der fünften ringförmigen Mulde angeordnet ist. Hierdurch wird eine dritte Formschlussverbindung des Abgasauslasssystems zwischen der Endrohrblendenaußenwandung und der Endrohrblendeninnenwandung über das zweite ringförmige Befestigungselement ausgebildet.

Die erfindungsgemäße Aufgabe wird weiterhin gelöst durch ein Kraftfahrzeug mit einem zuvor beschriebenen Abgasauslasssystem, wobei das Endrohr des Abgasauslasssystems mit der Abgasanlage des Kraftfahrzeugs verbunden ist.

Die erfindungsgemäße Aufgabe wird weiterhin gelöst durch ein Verfahren zur Herstellung eines Abgasauslasssystems, insbesondere eines zuvor beschriebenen Abgasauslasssystems, wobei das Verfahren folgende Verfahrensschritte aufweist:
I) Herstellung einer ersten ringförmigen Mulde an dem Endrohr;
II) Aufschieben der Endrohrblendenaußenwandung auf das Endrohr;
III) Anordnung der Endrohrblendeninnenwandung am Endrohr, wobei die Endrohrblendeninnenwandung eine zweite ringförmige Mulde aufweist, die zumindest teilweise in der ersten ringförmigen Mulde des Endrohrs angeordnet ist, wodurch eine erste Formschlussverbindung zwischen der Endrohrblendeninnenwandung und dem Endrohr entsteht;
IV) Anordnung des ersten ringförmigen Befestigungselements im Bereich der ersten ringförmigen Mulde, wodurch die Endrohrblendeninnenwandung am Endrohr befestigt wird;
VI) Aufschieben der Endrohrblendenaußenwandung auf die Endrohrblendeninnenwandung.

Das erfindungsgemäße Verfahren ermöglicht dadurch eine auch für unausgebildete Arbeiter durchführbare Montage einer Endrohrblende an einem Endrohr, wobei das Abgasauslasssystem dennoch auf konstruktiv einfache Art und Weise herstellbar ist.

Zwischen dem Verfahrensschritt IV und dem Verfahrensschritt VI kann das Verfahren folgenden Verfahrensschritt aufweisen:
V) Anordnung eines zweiten ringförmigen Befestigungselements an der Endrohrblendeninnenwandung, wobei das zweite ringförmige Befestigungselement dem ersten ringförmigen Befestigungselement axial entgegengesetzt angeordnet wird. Das zweite ringförmige Befestigungselement wird vorzugsweise in einer vierten ringförmigen Mulde der Endrohrblendeninnenwandung angeordnet.

Weitere Merkmale und Vorteile der Erfindung ergeben sich aus der nachfolgenden detaillierten Beschreibung mehrerer Ausführungsbeispiele der Erfindung, aus den Patentansprüche sowie anhand der Figuren der Zeichnungen, die erfindungswesentliche Einzelheiten zeigt.

Die in der Zeichnung gezeigten Merkmale sind derart dargestellt, dass die erfindungsgemäßen Besonderheiten deutlich sichtbar gemacht werden können. Die verschiebenden Merkmale können je einzeln für sich oder zu mehreren in beliebigen Kombinationen bei Varianten der Erfindung verwirklicht sein.

Es zeigen:
- Figur 1: eine schematische Darstellung eines Kraftfahrzeugs mit einem Abgasauslasssystem;
- Figur 2a: eine perspektivische Explosionsansicht des Abgasauslasssystems gemäß Figur 1;
- Figur 2b: eine perspektivische Ansicht des Abgasauslasssystems gemäß Figur 2a in teilweise montiertem Zustand;
- Figur 2c: eine perspektivische Ansicht des Abgasauslasssystems gemäß Figur 2b in vollständig montiertem Zustand;
- Figur 2d: eine schematische Seitenansicht eines Längsschnittes durch das Abgasauslasssystem gemäß Figur 2c;
- Figur 3a: eine perspektivische Ansicht mehrerer ringförmiger Befestigungselemente in Form von O-Ringen;
- Figuren 3b bis 3d: perspektivische Ansichten weiterer ringförmiger Befestigungselemente in Form von Schlauchklemmen;
- Figur 3e: eine perspektivische Ansicht eines weiteren ringförmigen Befestigungselements in Form eines teilweise unterbrochenen Metallrings und
- Figur 3f: eine perspektivische Ansicht eines weiteren ringförmigen Befestigungselements in Form eines Federrings.

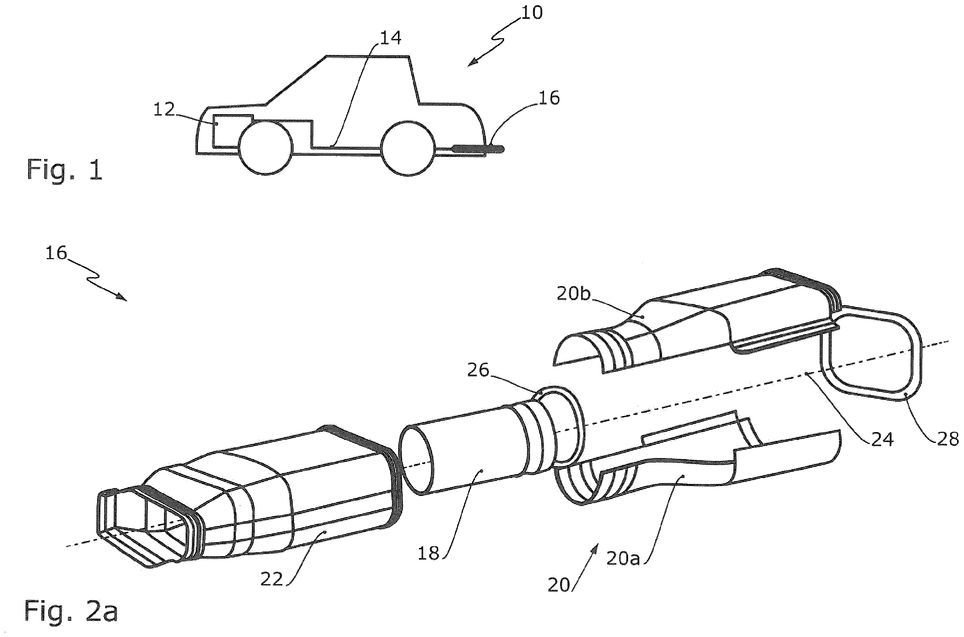

**Figur 1** zeigt ein Kraftfahrzeug **10** mit einem Verbrennungsmotor **12** und einer mit dem Verbrennungsmotor 12 verbundenen Abgasanlage **14.** Die Abgasanlage 14 ist fluidisch mit einem Abgasauslasssystem **16** verbunden.

**Figur 2a** zeigt das Abgasauslasssystem 16. Das Abgasauslasssystem 16 weist ein Endrohr **18,** eine Endrohrblendeninnenwandung **20** und eine Endrohrblendenaußenwandung **22** auf. In Figur 2a ist nur ein Teil des Endrohrs 18 dargestellt. Die Endrohrblendeninnenwandung 20 ist zweiteilig ausgebildet. Sie weist ein erstes Teil **20a** und ein zweites Teil **20b** auf. Im vorliegenden Fall ist die Endrohrblendeninnenwandung 20 parallel zur Längsachse **24** des Abgasauslasssystems 16 geteilt ausgebildet. Die Endrohrblendeninnenwandung 20 ist somit in axialer Richtung geteilt ausgebildet.

Allgemein werden im Sinne der vorliegenden Erfindung Richtungen parallel zur bzw. in Richtung der Längsachse 24 des Abgasauslasssystems 16 als "axial" und Richtungen senkrecht zur Längsachse 24 des Abgasauslasssystems 16 als "radial" bezeichnet.

Die Teile 20a, 20b können miteinander verrastbar ausgebildet sein. Die Fixierung der Teile 20a, 20b erfolgt im vorliegenden Fall durch ein erstes ringförmiges Befestigungselement **26** und ein zweites ringförmiges Befestigungselement **28.**

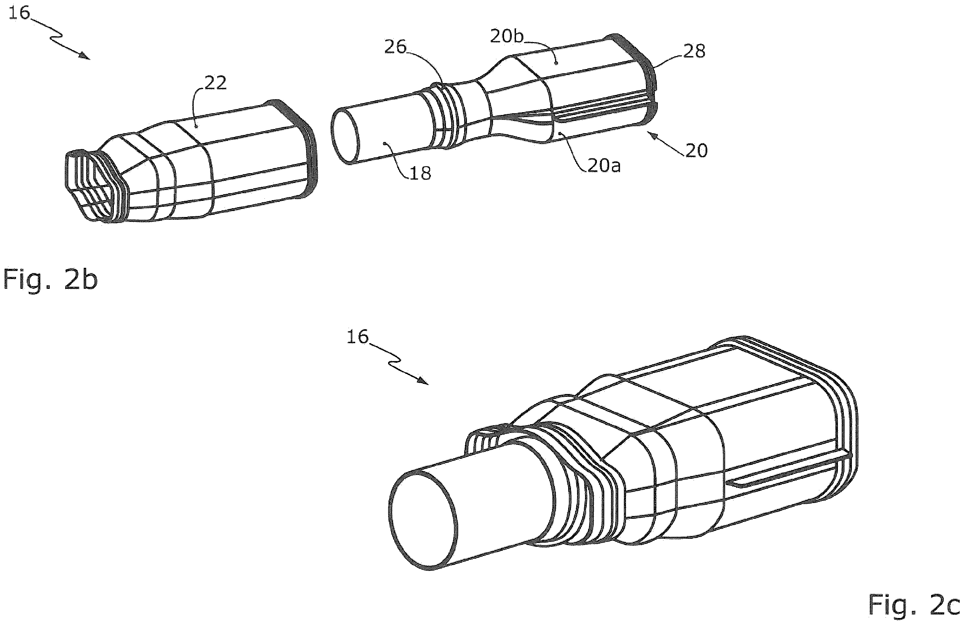

**Figur 2b** zeigt das Abgasauslasssystem 16, wobei die ringförmigen Befestigungselemente 26, 28 die Teile 20a, 20b radial verbinden und radial am Endrohr 18 halten. In einem abschließenden Montageschritt wird die Endrohrblendenaußenwandung 22 axial auf das Endrohr 18 in Richtung der Endrohrblendeninnenwandung 20 und weiter, zumindest zum überwiegenden Teil der Endrohrblendenaußenwandung 22, über die Endrohrblendeninnenwandung 20 geschoben.

**Figur 2c** zeigt das Abgasauslasssystem 16 im vollständig montierten Zustand.

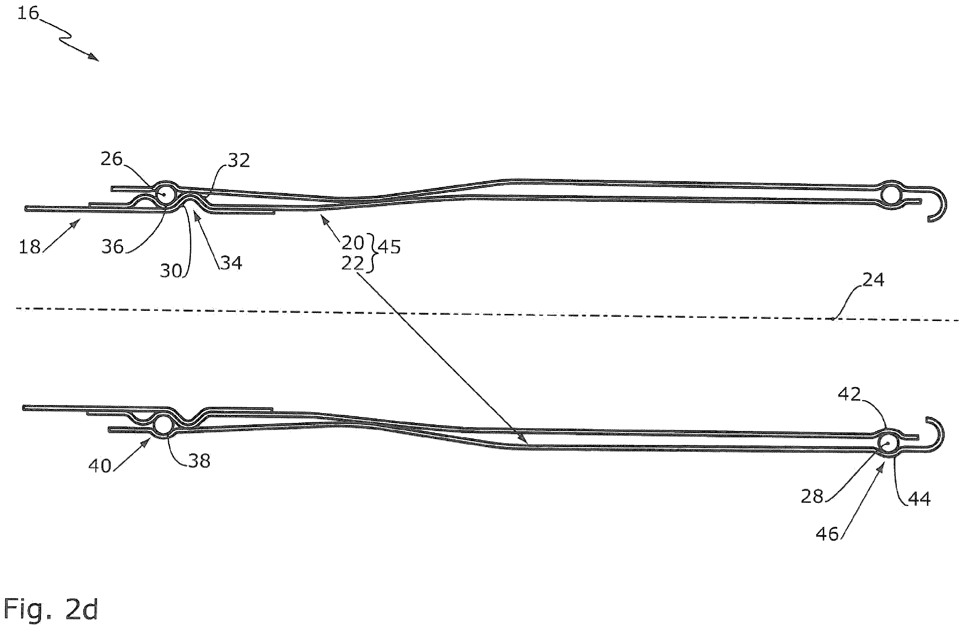

**Figur 2d** zeigt schematisch einen axialen Schnitt durch das Abgasauslasssystem 16 gemäß Figur 2c. Aus Figur 2d ist ersichtlich, dass das Abgasauslasssystem 16 im Wesentlichen axialsymmetrisch zur Längsachse 24 des Abgasauslasssystems 16 ausgebildet ist. Das Abgasauslasssystem 16 weist am Endrohr 18 eine erste ringförmige Mulde **30** auf. Weiterhin weist das Abgasauslasssystem 16 an der Endrohrblendeninnenwandung 20 eine zweite ringförmige Mulde **32** auf. Sowohl die erste ringförmige Mulde 30 als auch die zweite ringförmige Mulde 32 sind radial zur Längsachse 24 ausgebildet. Die erste ringförmige Mulde 30 schmiegt sich in die zweite ringförmige Mulde 32. Die erste ringförmige Mulde 30 stellt einen ersten Teil, die zweite ringförmige Mulde 32 einen zweiten Teil einer ersten Formschlussverbindung **34** des Abgasauslasssystems 16 dar. Die erste Formschlussverbindung 34 sichert die Endrohrblendeninnenwandung 20 gegen axiales Verschieben relativ zum Endrohr 18. Radial wird die Endrohrblendeninnenwandung 20 relativ zum Endrohr 18 durch das erste ringförmige Befestigungselement 26 gesichert. Das erste ringförmige Befestigungselement 26 ist dabei in einer Ringmuldenausnehmung **36** der Endrohrblendeninnenwandung 20 angeordnet und dadurch axial fixiert.

Die Endrohrblendenaußenwandung 22 weist eine dritte ringförmige Mulde **38** auf. Die dritte ringförmige Mulde 38 ist radial ausgebildet. Das erste ringförmige Befestigungselement 26 ist in der dritten ringförmigen Mulde 38 teilweise aufgenommen. Hierdurch entsteht eine zweite Formschlussverbindung **40,** die die Endrohrblendenaußenwandung 22 axial relativ zur Endrohrblendeninnenwandung 22 fixiert.

Eine vierte ringförmige Mulde **42** ist in der Endrohrblendeninnenwandung 20 im Auslassbereich des Abgasauslasssystems 16 ausgebildet. Das zweite ringförmige Befestigungselement 28 ist teilweise in der vierten ringförmigen Mulde 42 angeordnet. Die vierte ringförmige Mulde 42 ist radial ausgebildet. Weiterhin weist die Endrohrblendenaußenwandung 22 eine fünfte ringförmige Mulde **44** auf, in der das zweite ringförmige Befestigungselement 28 teilweise angeordnet ist. Die fünfte ringförmige Mulde 44 ist radial ausgebildet. Durch die vierte ringförmige Mulde 42, die fünfte ringförmige Mulde 44 und das zweite Befestigungselement 28 entsteht eine dritte Formschlussverbindung **46** des Abgasauslasssystems 16, die die Endrohrblendenaußenwandung 22 zusätzlich gegen axiales Verschieben relativ zur Endrohrblendeninnenwandung 20 sichert.

Die Endrohrblendeninnenwandung 20 bildet zusammen mit der Endrohrblendenaußenwandung 22 eine Endrohrblende **45.**

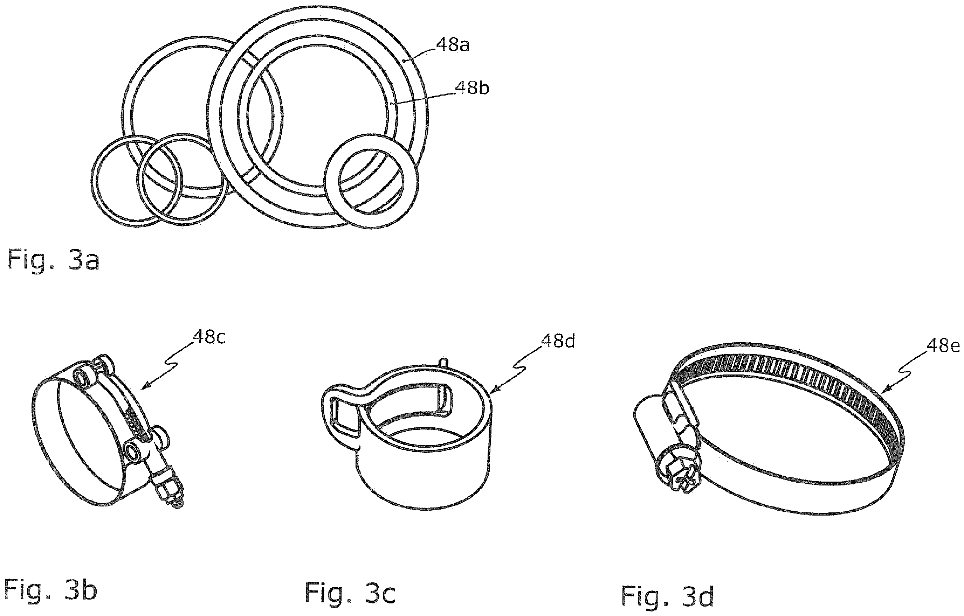

Die **Figuren 3a** bis **3f** zeigen exemplarisch verschiedene Ausführungsformen ringförmiger Befestigungselemente **48a** bis **48g** zum Einsatz als erstes ringförmiges Befestigungselement 26 bzw. zweites ringförmiges Befestigungselement 28 (siehe Figuren 2a, 2b und 2d).

Figur 3a zeigt ringförmige Befestigungselemente 48a, 48b in Form von O-Ringen, von denen aus Gründen der Übersichtlichkeit lediglich zwei O-Ringe mit einem Bezugszeichen versehen sind.

Die Figuren 3b bis 3d zeigen verschiedene Ausführungsformen ringförmiger Befestigungselemente in Form von Schlauchschellen bzw. Schlauchklemmen 48c bis 48e.

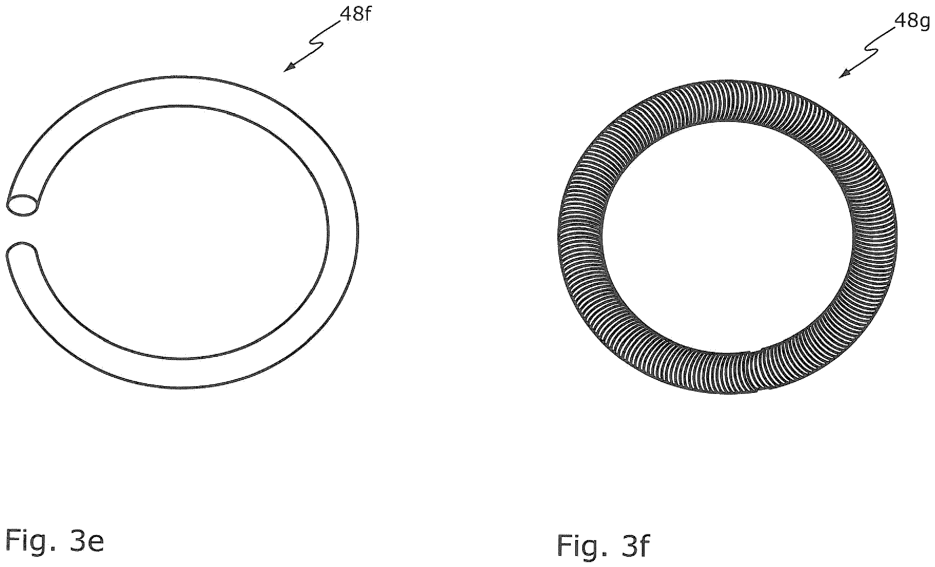

Figur 3e zeigt ein besonders bevorzugtes Ausführungsbeispiel eines ringförmigen Befestigungselements 48f. Das ringförmige Befestigungselement 48f ist in Form eines geöffneten Metallrings ausgebildet. Vorzugsweise ist das ringförmige Befestigungselement 48f in Form eines geöffneten Stahlrings ausgebildet. Wird zumindest ein ringförmiges Befestigungselement 26, 28 (siehe Figuren 2a, 2b und 2d) in Form eines ringförmigen Befestigungselements 48f gemäß Figur 3e ausgebildet, kann das Abgasauslasssystem 16 (siehe Figuren 1 und 2a bis 2d) konstruktiv besonders einfach und kostengünstig ausgebildet werden,

Figur 3f zeigt ein weiteres ringförmiges Befestigungselement 48g in Form einer endlosen Spiralfeder.

Unter Vornahme einer Zusammenschau aller Figuren der Zeichnungen betrifft die vorliegende Erfindung zusammenfassend ein Abgasauslasssystem 16 für ein Kraftfahrzeug 10 mit einem Endrohr 18 und einer auf dem Endrohr 18 angeordneten Endrohrblende 45. Die Endrohrblende 45 ist durch eine Endrohrblendeninnenwandung 20 und eine Endrohrblendenaußenwandung 22 zumindest doppelwandig ausgebildet. Die Endrohrblendeninnenwandung 20 ist zumindest zweiteilig ausgebildet und radial um das Endrohr 18 schließbar. Die Endrohrblendeninnenwandung 20 ist zumindest teilweise formschlüssig an das Endrohr 18 anordenbar, sodass die Endrohrblendeninnenwandung 20 in ihrem am Endrohr 18 montierten Zustand nicht axial verschiebbar ist. Ein erstes ringförmiges Befestigungselement 26 hält die Endrohrblendeninnenwandung 20 radial fixiert am Endrohr 18. Die Endrohrblendenaußenwandung 22 ist axial über die Endrohrblendeninnenwandung 20 schiebbar. Die Endrohrblenden-außenwandung 22 ist vorzugsweise durch eine Rastverbindung axial an der Endrohrblendeninnenwandung 20 fixiert.

## Patentansprüche

1. Abgasauslasssystem (16) für ein Kraftfahrzeug (10), wobei das Abgasauslasssystem (16) Folgendes aufweist:
a) Ein Endrohr (18) zur fluidischen Verbindung mit einer Abgasanlage (14), wobei das Endrohr (18) einen ersten Teil einer ersten Formschlussverbindung (34) aufweist;
b) Eine Endrohrblende (45) mit
i) einer zumindest zweiteiligen Endrohrblendeninnenwandung (20);
ii) einer axial auf die Endrohrblendeninnenwandung (20) aufschiebbaren Endrohrblendenaußenwandung (22);
c) Ein erstes ringförmiges Befestigungselement (26), das die zumindest zweiteilige Endrohrblendeninnenwandung (20) im Bereich des ersten Teils der ersten Formschlussverbindung (34) am Endrohr (18) radial fixiert, wobei das Abgasauslasssystem (16) an der Endrohrblendeninnenwandung (20) einen zweiten Teil der ersten Formschlussverbindung (34) zur zumindest teilweise formschlüssigen Anbindung der Endrohrblendeninnenwandung (20) an das erste ringförmige Befestigungselement (26) aufweist,
**dadurch gekennzeichnet, dass** der erste Teil der ersten Formschlussverbindung (34) in Form einer ersten ringförmigen Mulde (30) ausgebildet ist und der zweite Teil der ersten Formschlussverbindung (34) in Form einer zweiten ringförmigen Mulde (32) ausgebildet ist.

2. Abgasauslasssystem nach Anspruch 1, bei dem die Verbindung zwischen Endrohrblende (45) und Endrohr (18) ohne Stoffschluss erfolgt.

3. Abgasauslasssystem nach einem der vorhergehenden Ansprüche, bei dem das Abgasauslasssystem (16) an der Endrohrblendenaußenwandung (22) eine dritte ringförmige Mulde (38) aufweist, in der das erste ringförmige Befestigungselement (26) zumindest teilweise angeordnet ist, sodass eine zweite Formschlussverbindung (40) ausgebildet wird.

4. Abgasauslasssystem nach einem der vorhergehenden Ansprüche, bei dem das Abgasauslasssystem (16) ein zweites ringförmiges Befestigungselement (28) aufweist, das die zumindest zweiteilige Endrohrblendeninnenwandung (20) radial fixiert, wobei das zweite ringförmige Befestigungselement (28) dem ersten ringförmigen Befestigungselement (26) axial gegenüberliegend an der Endrohrblendeninnenwandung (20) angeordnet ist.

5. Abgasauslasssystem nach Anspruch 4, bei dem das Abgasauslasssystem (16) an der zweiteiligen Endrohrblendeninnenwandung (20) eine vierte ringförmige Mulde (42) aufweist, in der das zweite ringförmige Befestigungselement (28) zumindest teilweise angeordnet ist.

6. Abgasauslasssystem nach Anspruch 5, bei dem das Abgasauslasssystem (16) an der Endrohrblendenaußenwandung (22) eine fünfte ringförmige Mulde (44) aufweist, in der das zweite ringförmige Befestigungselement (28) zumindest teilweise angeordnet ist, sodass eine dritte Formschlussverbindung (46) ausgebildet wird.

7. Kraftfahrzeug (10) mit einem Abgasauslasssystem (16) nach einem der Ansprüche 1 bis 6, wobei das Endrohr (18) fluidisch mit einer Abgasanlage (14) des Kraftfahrzeugs (10) verbunden ist.

8. Verfahren zur Herstellung eines Abgasauslasssystems (16) für ein Kraftfahrzeug (10), wobei das Verfahren folgende Verfahrensschritte aufweist:
I) Herstellen einer ersten ringförmigen Mulde (30) in einem Endrohr (18);
II) Aufschieben einer Endrohrblendenaußenwandung (22) auf das Endrohr (18);
III) Anordnen einer zumindest zweiteiligen Endrohrblendeninnenwandung (20) mit einer zweiten ringförmigen Mulde (32), am Endrohr (18) durch eine erste Formschlussverbindung (34) der zweiten ringförmigen Mulde (32) mit der ersten ringförmigen Mulde (30);
IV) Fixieren der Endrohrblendeninnenwandung (20) mit einem ersten ringförmigen Befestigungselement (26) im Bereich der ersten ringförmigen Mulde (30);
VI) Schieben der Endrohrblendenaußenwandung (22) über die Endrohrblendeninnenwandung (20).

9. Verfahren nach Anspruch 8, bei dem das Verfahren folgenden Verfahrensschritt aufweist:
V) Fixieren der Endrohrblendeninnenwandung (20) mit einem zweiten ringförmigen Befestigungselement (28) in einem Bereich der Endrohrblendeninnenwandung (20), der dem Bereich, in dem das erste ringförmige Befestigungselement (26) angeordnet ist, axial entgegengesetzt ist.

## Claims

1. Exhaust gas outlet system (16) for a motor vehicle (10), wherein said exhaust gas outlet system (16) comprises the following:
a) an end pipe (18) for fluidically connecting to an exhaust gas system (14), wherein the end pipe (18) has a first portion of a first interlocking connection (34);
b) an end pipe cover (45) having
i) an at least two-part end pipe cover inner wall (20);
ii) an end pipe cover outer wall (22) which can be pushed axially onto the end pipe cover inner wall (20);
c) a first annular fastening element (26) which radially fastens the at least two-part end pipe cover inner wall (20) in the region of the first portion of the first interlocking connection (34) on the end pipe (18), wherein the exhaust gas outlet system (16) on the end pipe cover inner wall (20) has a second portion of the first interlocking connection (34) for the at least partial interlocking connection of the end pipe cover inner wall (20) to the first annular fastening element (26),
**characterized in that** the first portion of the first interlocking connection (34) is designed in the form of a first annular recess (30), and the second portion of the first interlocking connection (34) is designed in the form of a second annular recess (32).

2. Exhaust gas outlet system according to claim 1, in which the connection between the end pipe cover (45) and the end pipe (18) is established without a materially bonding connection.

3. Exhaust gas outlet system according to one of the previous claims, in which the exhaust gas outlet system (16), in the end pipe cover outer wall (22), has a third annular recess (38), in which the first annular fastening element (26) is at least partially arranged, so that a second interlocking connection (40) is formed.

4. Exhaust gas outlet system according to one of the previous claims, in which the exhaust gas outlet system (16) has a second annular fastening element (28) which radially fastens the at least two-part end pipe cover inner wall (20), wherein the second annular fastening element (28) is arranged axially opposite the first annular fastening element (26) on the end pipe cover inner wall (20).

5. Exhaust gas outlet system according to claim 4, in which the exhaust gas outlet system (16), in the two-part end pipe cover inner wall (20), has a fourth annular recess (42), in which the second annular fastening element (28) is at least partially arranged.

6. Exhaust gas outlet system according to claim 5, in which the exhaust gas outlet system (16), in the end pipe cover outer wall (22), has a fifth annular recess (44), in which the second annular fastening element (28) is at least partially arranged, so that a third interlocking connection (46) is formed.

7. Motor vehicle (10) having an exhaust gas outlet system (16) according to one of claims 1 to 6, wherein the end pipe (18) is fluidically connected to an exhaust gas system (14) of the motor vehicle (10).

8. Method for producing an exhaust gas outlet system (16) for a motor vehicle (10), wherein the method comprises the following method steps:
I) producing a first annular recess (30) in an end pipe (18);
II) pushing an end pipe cover outer wall (22) onto the end pipe (18);
III) arranging an at least two-part end pipe cover inner wall (20) with a second annular recess (32) on the end pipe (18) by means of a first interlocking connection (34) of the second annular recess (32) with the first annular recess (30);
IV) fastening the end pipe cover inner wall (20) with a first annular fastening element (26) in the region of the first annular recess (30);
VI) pushing the end pipe cover outer wall (22) over the end pipe cover inner wall (20).

9. Method according to claim 8, in which the method comprises the following method step:
V) fastening the end pipe cover inner wall (20) with a second annular fastening element (28) in a region of the end pipe cover inner wall (20) which is axially opposite the region, in which the first annular fastening element (26) is arranged.

## Revendications

1. Système de sortie de gaz d'échappement (16) pour un véhicule automobile (10), le système de sortie de gaz d'échappement (16) présentant :
a) un tube d'extrémité (18) pour la liaison fluidique à un système d'échappement (14), le tube d'extrémité (18) présentant une première partie d'une première liaison par complémentarité de forme (34) ;
b) une garniture de tube d'extrémité (45) avec
i) une paroi intérieure de garniture de tube d'extrémité (20) au moins en deux parties ;
ii) une paroi extérieure de garniture de tube d'extrémité (22) qui peut être poussée axialement sur la paroi intérieure de garniture de tube d'extrémité (20) ;
c) un premier élément de fixation annulaire (26) qui fixe radialement la paroi intérieure de garniture de tube d'extrémité (20) au moins en deux parties sur le tube d'extrémité (18) dans la zone de la première partie de la première liaison par complémentarité de forme (34), le système de sortie de gaz d'échappement (16) présentant sur la paroi intérieure de garniture de tube d'extrémité (20) une deuxième partie de la première liaison par complémentarité de forme (34) pour relier au moins partiellement par complémentarité de forme la paroi intérieure de garniture de tube d'extrémité (20) au premier élément de fixation annulaire (26),
**caractérisé en ce que** la première partie de la première liaison par complémentarité de forme (34) est réalisée sous la forme d'une première cuvette annulaire (30) et la deuxième partie de la première liaison par complémentarité de forme (34) est réalisée sous la forme d'une deuxième cuvette annulaire (32).

2. Système de sortie de gaz d'échappement selon la revendication 1, dans lequel la liaison entre la garniture de tube d'extrémité (45) et le tube d'extrémité (18) s'effectue sans apport de matière.

3. Système de sortie de gaz d'échappement selon l'une des revendications précédentes, dans lequel le système de sortie de gaz d'échappement (16) présente, sur la paroi extérieure de garniture de tube d'extrémité (22), une troisième cuvette annulaire (38) dans laquelle le premier élément de fixation annulaire (26) est disposé au moins partiellement, de sorte qu'une deuxième liaison par complémentarité de forme (40) est formée.

4. Système de sortie de gaz d'échappement selon l'une des revendications précédentes, dans lequel le système de sortie de gaz d'échappement (16) présente un deuxième élément de fixation annulaire (28) qui fixe radialement la paroi intérieure de garniture de tube d'extrémité (20) au moins en deux parties, le deuxième élément de fixation annulaire (28) étant axialement opposé au premier élément de fixation annulaire (26) sur la paroi intérieure de garniture de tube d'extrémité (20).

5. Système de sortie de gaz d'échappement selon la revendication 4, dans lequel le système de sortie de gaz d'échappement (16) présente, sur la paroi intérieure de garniture de tube d'extrémité (20) en deux parties, une quatrième cuvette annulaire (42) dans laquelle le deuxième élément de fixation annulaire (28) est disposé au moins partiellement.

6. Système de sortie de gaz d'échappement selon la revendication 5, dans lequel le système de sortie de gaz d'échappement (16) présente, sur la paroi extérieure de garniture de tube d'extrémité (22), une cinquième cuvette annulaire (44) dans laquelle le deuxième élément de fixation annulaire (28) est disposé au moins partiellement, de sorte qu'une troisième liaison par complémentarité de forme (46) est formée.

7. Véhicule automobile (10) équipé d'un système de sortie de gaz d'échappement (16) selon l'une des revendications 1 à 6, dans lequel le tube d'extrémité (18) est relié fluidiquement à un système d'échappement (14) du véhicule automobile (10).

8. Procédé de fabrication d'un système de sortie de gaz d'échappement (16) pour un véhicule automobile (10), le procédé comprenant les étapes de procédé consistant à :
I) réaliser une première cuvette annulaire (30) dans un tube d'extrémité (18) ;
II) pousser une paroi extérieure de garniture de tube d'extrémité (22) sur le tube d'extrémité (18) ;
III) disposer une paroi intérieure de garniture de tube d'extrémité (20) au moins en deux parties avec une deuxième cuvette annulaire (32) sur le tube d'extrémité (18) par une première liaison par complémentarité de forme (34) de la deuxième cuvette annulaire (32) avec la première cuvette annulaire (30) ;
IV) fixer la paroi intérieure de garniture de tube d'extrémité (20) avec un premier élément de fixation annulaire (26) dans la zone de la première cuvette annulaire (30) ;
VI) pousser la paroi extérieure de garniture de tube d'extrémité (22) sur la paroi intérieure de garniture de tube d'extrémité (20).

9. Procédé selon la revendication 8, le procédé présentant l'étape consistant à :
V) fixer la paroi intérieure de garniture de tube d'extrémité (20) avec un deuxième élément de fixation annulaire (28) dans une zone de la paroi intérieure de garniture de tube d'extrémité (20) qui est axialement opposée à la zone dans laquelle le premier élément de fixation annulaire (26) est disposé.
